# EUROPÄISCHE PATENTSCHRIFT

(11) **EP 3 273 556 B1**
(45) Veröffentlichungstag und Bekanntmachung des Hinweises auf die Patenterteilung: **25.11.2020**
(21) Anmeldenummer: 17181784.4
(22) Anmeldetag: 18.07.2017
(51) Int. Cl.: H02G 3/04, H02G 3/22

(54) **BRANDGESCHÜTZTE ROHR-/KABELDURCHFÜHRUNG**
FLAME RETARDED TUBE/CABLE FEEDTHROUGH
COLLIER DE PASSAGE POUR TUYAU / PASSAGE DE CÂBLES IGNIFUGÉ

(30) Priorität: 20.07.2016 DE 102016113330
(43) Veröffentlichungstag der Anmeldung: 24.01.2018
(73) Patentinhaber: svt BRANDSCHUTZ Vertriebsgesellschaft mbH, 21217 Seevetal (DE)
(72) Erfinder: Reher, Reinald, 59379 Selm (DE)
(74) Vertreter: Stüven, Ralf

(56) Entgegenhaltungen:
- DE-A1-102014 108 549
- DE-U1-202006 012 624
- US-A1- 2014 356 564
- US-A1- 2015 093 556
- US-A1- 2016 083 627

## Beschreibung

### BRANDGESCHÜTZTE ROHR-/KABELDURCHFÜHRUNG

Die Erfindung betrifft eine brandgeschützte Rohr-/Kabeldurchführung, eine Brandschutzhülle für eine brandgeschützte Rohr-/Kabeldurchführung und eine Anordnung, die eine brandgeschützte Rohr-/Kabeldurchführung umfasst.

Brandgeschützte Rohr-/Kabeldurchführungen zum Einbau in Decken und Wände sind grundsätzlich bekannt und dienen im Wesentlichen dazu, die Ausbreitung von Feuer und/oder Rauch über derartige Durchführungen sowie Kabelbrände zu verhindern.

Brandgeschützte Kabeldurchführungen sind beispielsweise in der DE 196 53 963 A1, DE 20 2004 011 295 U1 und der DE 10 2008 003 120 A1 beschrieben. Es handelt sich dabei um beidseitig offene Gehäuse mit einem einen Kabelkanal bildenden Innenraum, der bei großer Wärme bzw. im Brandfall expandierende Brandschutzpakete oder -streifen aufweist. Die Gehäuse werden in Decken- bzw. Wanddurchbrüchen von z.B. Gebäuden eingebaut, um Kabel und/oder Leerrohre durch Decken oder Wände hindurchführen zu können.

Aus der EP 2339708 A2 ist beispielsweise eine brandgeschützte Kabeldurchführung bekannt, die Halbschalen umfasst, die aus Kunststoff bestehen können und mit den offenen Seiten einander zugewandt sind, wobei mindestens eine der Halbschalen auf ihrer Innenseite zumindest teilweise mit einem Dämmschichtbildner beschichtet ist. Die Halbschalen sind durch Steck- und/oder Klemmverbinder unter Ausbildung eines Hohlkörpers miteinander verbunden.

Darüber hinaus sind auch brandgeschützte Kabeldurchführungen auf Basis von Schaumstoffen mit intumeszenten Eigenschaften im Stand der Technik bekannt, s. z.B. EP 0 400 402 A1 und DE 10 2004 056 913 A1. Weiterer Stand der Technik ist in US 2014/356564 A1, DE 20 2006 012624 U1, US 2016/083627 A1, US 2015/093556 A1 zu finden .

Aufgabe der vorliegenden Erfindung ist es, eine einfache, leicht herstellbare, leicht zu handhabende und vergleichsweise kostengünstige brandgeschützte Rohr-/Kabeldurchführung bereit zu stellen, die auch zur Nachrüstung geeignet ist.

Erfindungsgemäß wird die Aufgabe in einem ersten Aspekt gelöst durch eine brandgeschützte Rohr-/Kabeldurchführung mit den kennzeichnenden Merkmalen des Anspruchs 1. In einem zweiten Aspekt stellt die Erfindung auch eine Brandschutzhülle bereit, mit deren Hilfe eine erfindungsgemäße brandgeschützte Rohr-/Kabeldurchführung hergestellt werden kann.

Die brandgeschützte Rohr-/Kabeldurchführung gemäß der vorliegenden Erfindung ist vor allem durch den Verzicht auf ein zusätzliches Mantelgehäuse aus Metall oder Kunststoff besonders einfach im Aufbau und kann leicht und kostengünstig hergestellt und eingesetzt werden. Sie ist insbesondere für Trockenbauwände sehr gut geeignet, kann aber auch vorteilhaft in Massivwänden etc. eingesetzt werden. Sie weist sehr gute Brandschutzeigenschaften auf und kann sowohl bei Neuinstallationen vorgesehen oder nachträglich installiert werden. Sie kann auch als Schalungskörper zur späteren Belegung mit Kabeln, Rohren und dergleichen eingebaut bzw. nachgerüstet werden. Die erfindungsgemäße brandgeschützte Kabeldurchführung ist besonders gut geeignet für die direkte Belegung mit Kabeln, d.h. die Belegung mit Kabeln, die nicht weiter, z.B. durch ein Rohr oder eine andere Umhüllung, geschützt sind.

Unter einer "Kabel-/Rohrdurchführung" wird hier eine Vorrichtung zur Verlegung und gegebenenfalls zum Schutz von Kabeln, Rohren oder auch anderen sich vorwiegend in Längsrichtung erstreckenden Elementen durch ein bauliches Trennelement, beispielsweise eine Wand oder Decke verstanden. Unter einer "brandgeschützten Kabel-/Rohrdurchführung" wird hier eine beispielsweise durch Intumeszenz- und/oder Ablationsbaumaterialien feuerwiderstandsfähig gemachte Kabel-/Rohrdurchführung verstanden.

Unter einem "flächigen Träger" wird hier ein im Wesentlichen flächig ausgebildetes, d.h. sich in nur zwei Dimensionen in nennenswertem Umfang ausdehnendes Substrat verstanden. Ein Beispiel für einen flächigen Träger im Sinne der Erfindung ist ein Gewebeabschnitt, z.B. ein Glasfaser- oder Metallgewebe, oder eine Folie, beispielsweise eine thermoplastische, duroplastische oder metallische Folie. Unter den Begriff "Träger" fallen auch Verstärkungslagen aus beispielsweise Glas- oder Kunststofffasern. Der Begriff "flexibel" in Zusammenhang mit dem flächigen Träger bedeutet, dass der Träger von Hand vorzugsweise ohne Werkzeugeinsatz geformt, beispielsweise gebogen oder gefaltet werden kann.

Unter einer "Brandschutzschicht" wird hier eine mindestens ein Brandschutzmittel umfassende Schicht, beispielsweise eine Schicht aus einem in eine Matrix, ein Lösungsmittel oder dergleichen eingebetteten Brandschutzmittel, verstanden. Der Begriff erfasst insbesondere Schichten, die vorzugsweise dazu dienen, die Ausbreitung eines Brandes auf andere Strukturen als die Schicht selbst, beispielsweise hinter der Brandschutzschicht liegende oder von der Brandschutzschicht umgebene Strukturen, und nicht nur das Übergreifen eines Brandes auf die Schicht mit dem Brandschutzmittel selbst zu verhindern oder zu hemmen. Eine Brandschutzschicht hat somit vorzugsweise einen raumabschließenden oder -abgrenzenden Charakter. Unter einem "Brandschutzmittel" wird hier ein Stoff oder eine Stoffzusammensetzung verstanden, der bzw. die eine brandhemmende Wirkung, also eine die Ausbreitung eines Brandes einschränkende, verlangsamende oder verhindernde Wirkung entfaltet. Beispiele für Brandschutzmittel sind intumeszierende Materialien (Dämmschichtbildner) wie Blähgraphit oder Wasser abspaltende Stoffe (Ablationsbaustoffe) wie Aluminiumhydroxid. Der Begriff umfasst auch zwei oder mehrere verschiedene unabhängig voneinander oder synergistisch zusammen brandhemmend wirkende Stoffe oder Stoffzusammensetzungen. Ein Beispiel für eine Brandschutzschicht ist eine von einem Dämmschichtbildner ausgekleidete Kabeldurchführung, die im Brandfall stark aufschäumt und so den Querschnitt der Durchführung verstopft, um die Brandweiterleitung über die Kabeldurchführung zu verhindern oder zu verzögern.

Unter einem "Dämmschichtbildner" oder "intumeszierenden Material" wird hier ein Material verstanden, das bei Raumtemperatur ein vergleichsweise geringes Volumen aufweist und unter Hitzeeinwirkung, vorzugsweise bei 150 °C bis 200 °C, eine deutliche Volumenzunahme erfährt, vorzugsweise unter Erzeugung eines erheblichen Blähdrucks von z.B. 1-2 N/mm². In der Regel wird bei einem solchen Material unter Wärmeeinwirkung, d.h. bei Überschreiten einer bestimmten Temperatur, z.B. 150 °C, eine stark wärmedämmende, thermisch weitgehend stabile Schaumschicht gebildet, die die dahinter liegenden bzw. davon umschlossenen Materialien schützt. Der Schaumfaktor, d.h. das Verhältnis zwischen der Schichtdicke des Dämmschichtbildners im aufgeschäumten Zustand und der Schichtdicke des Dämmschichtbildners vor dem Aufschäumen, beträgt vorzugsweise mindestens 1,5, weiter bevorzugt mindestens 2, 3, 4, 5, 6, 8 oder mindestens 10, besonders bevorzugt mindestens 15, 20, 30, 40, 50 oder 60.

Unter einem "Ablationsbaustoff" werden ablativ wirkende Materialien verstanden, die bei Hitzeeinwirkung nur vergleichsweise gering expandieren, jedoch durch chemische und/oder physikalische Prozesse der Umgebung Wärmeenergie entziehen und dadurch eine Kühlung des mit dem Ablationsbaustoff beschichteten Trägermaterials bewirken. Der Ablationsbaustoff kann sich beispielsweise durch endotherme Reaktionen chemisch verändern, beispielsweise keramisieren, oder verdampfen, sublimieren oder schmelzen. Der Ablationsbaustoff kann beispielsweise Hydrate beinhalten, die bei Erhitzung Wasserdampf freisetzen. Darüber hinaus kann der Ablationsbaustoff gegebenenfalls Substanzen abgeben, die eine flammhemmende Wirkung haben. Nach Abschluss der chemischen und/oder physikalischen Prozesse bleibt häufig eine nichtbrennbare Masse zurück, die zusätzlich thermisch isolierend wirkt.

Unter einer "Trockenbauwand" wird hier eine vorgefertigte nicht-tragende raumbegrenzende Wand für den Trockenbau, insbesondere eine aus zement- oder gipsbasierten Platten, z.B. Leichtbeton(Glasfaserbeton)- oder Gipskartonplatten, gefertigte Wand für den Innenbereich verstanden. Unter einer "Hohlwand" wird eine Wand mit einem inneren Hohlraum verstanden, der aus schall- oder wärmetechnischen Gründen mit Mineralfaserplatten ausgefüllt sein kann.

Unter einer "Mineralfaserplatte" ist eine Platte aus Mineralfasern, d.h. anorganischen Fasern natürlichen oder künstlichen Ursprungs zu verstehen. Beispiele hierfür sind Stein, Quarz- oder Glasfaserplatten.

Unter einer "duroplastischen Folie" wird eine Folie aus duroplastischem Material verstanden. Unter einer metallischen Folie wird eine Folie aus einem Metall verstanden, beispielsweise eine Aluminiumfolie.

Die erfindungsgemäße brandgeschützte Rohr-/Kabeldurchführung zeichnet sich aus durch einen vorzugsweise nicht-brennbaren Träger, der zu einer schlauchförmigen Brandschutzhülle aufgerollt oder gefaltet ist und auf diese Weise einen zweiseitig offenen Hohlraum bildet, in den Kabel, Rohre oder dergleichen eingelegt werden können. Bei vorhandener Belegung einer Öffnung mit Kabeln kann die Durchführung auch nachträglich um die Kabel gelegt und verschlossen werden. Der Träger kann ein- oder beidseitig eine Brandschutzschicht aufweisen, wobei die Brandschutzschicht mindestens auf der zum Hohlraum weisenden Fläche angeordnet ist. Die Brandschutzschicht kann je nach Schutzanforderung dabei die gesamte Fläche oder auch nur einen Teilbereich davon bedecken. Über die Art und/oder die ein- oder zweiseitige Anordnung der Brandschutzschicht, die davon bedeckte Fläche und deren Schichtdicke können unterschiedliche Schutzanforderungen abgedeckt werden. Auf der dem Hohlraum gegenüberliegenden Fläche des Trägers ist eine vorzugsweise nicht-brennbare Metallfolie angeordnet, die mittels einer Klebschicht auf dem Träger angeordnet ist. Im Falle eines nur einseitig auf der zum Hohlraum weisenden Fläche mit einer Brandschutzschicht, beispielsweise einer Dämmschichtbildnerschicht, beschichteten Trägers ist die Metallfolie unmittelbar mittels der Klebschicht auf dem Träger angeordnet. Im Falle eines zweiseitig mit einer Brandschutzschicht beschichteten Trägers ist die Metallfolie mittels der Klebschicht auf der außenseitigen Brandschutzschicht angeordnet. Die Metallfolie erstreckt sich über einen der Endabschnitte des Trägers hinaus und ist mittels der Klebschicht mit dem gegenüberliegenden Endabschnitt des Trägers verbunden. Die Metallfolie kann beispielsweise in einer Weise versetzt auf dem Träger angeordnet sein, dass die Metallfolie an einem Ende des Trägers übersteht, während am anderen Ende des Trägers ein Abschnitt von der Dimension des überstehenden Folienteils frei bleibt, so dass nach dem Verbinden der Metallfolie mit dem gegenüberliegenden Endabschnitt der ursprünglich freigebliebene Bereich von dem überstehenden Folienteil abgedeckt wird. Bei der Metallfolie kann es sich beispielsweise um eine Aluminiumfolie handeln. Die Endabschnitte des Trägers liegen mit ihren Stirnseiten unmittelbar aneinander, d.h. einander berühren.

Wenn hier von einem Träger gesprochen wird, der mit einer Brandschutzschicht beschichtet ist, umfasst das auch den Fall, dass ein Trägermaterial, beispielsweise Glasfasern oder Kunststofffasern in eine Matrix eingebettet sind, die ein Brandschutzmittel, beispielsweise einen Dämmschichtbildner oder Ablationsbaustoff, enthält.

Bei einer bevorzugten Ausführungsform der erfindungsgemäßen Rohr-/Kabeldurchführung besteht der Träger aus einem vorzugsweise nicht-brennbaren Gewebe oder einer duroplastischen oder metallischen Folie oder umfasst ein nicht-brennbares Gewebe oder eine duroplastische oder metallische Folie. Bei dem Gewebe kann es sich beispielsweise um ein Glasfasergewebe oder ein Metallgewebe handeln. Im Falle eines Gewebes ist es besonders bevorzugt, dass das Gewebe so gewoben ist, dass sich der Träger leicht in der gewünschten Richtung aufrollen oder falten, vorzugsweise aufrollen lässt.

In einer besonders bevorzugten Ausführungsform der erfindungsgemäßen brandgeschützten Rohr-/Kabeldurchführung ist der Träger im Wesentlichen rechteckförmig mit einer Länge x_{T} und einer Breite y_{T} ist und die Metallfolie ist im Wesentlichen ebenfalls rechteckförmig mit einer Länge x_{M} und einer Breite y_{M}, wobei die Länge x_{T} des Trägers der Länge x_{M} der Metallfolie entspricht, und wobei die Metallfolie in Längsrichtung des Trägers, d.h. in Richtung von der ersten Stirnseite zur zweiten Stirnseite, um einen Versatz v_{M} versetzt auf dem Träger angeordnet ist, so dass die Metallfolie sich um den Versatz v_{M} über einen der Endabschnitte des Trägers hinaus erstreckt. Die Breite y_{M} der Metallfolie ist dabei vorzugsweise etwas geringer als die Breite y_{T} ist des Trägers, so das vorzugsweise beidseitig ein nicht mit der Metallfolie beklebter Rand verbleibt.

Bei der erfindungsgemäßen brandgeschützten Rohr-/Kabeldurchführung kann die Brandschutzhülle einen runden, ovalen oder polygonalen Querschnitt, vorzugsweise einen kreisförmigen, rechteckigen oder quadratischen Querschnitt aufweisen. Besonders bevorzugt weist die Brandschutzhülle einen kreisförmigen Querschnitt auf.

Insbesondere für den Fall eines Einsatzes als Schalungskörper für die spätere Belegung mit Rohren oder Kabeln können die Öffnungen des Hohlraums der erfindungsgemäßen brandgeschützten Rohr-/Kabeldurchführung auch mit Kappen und/oder Schaumstoffzuschnitten verschlossen sein. Alternativ oder zusätzlich kann zentral im Inneren des Hohlraumes vorzugsweise über dessen gesamten Querschnitt eine Mineralfaserisolierung oder ein Schaumstoffzuschnitt vorgesehen sein. Alternativ oder gegebenenfalls auch zusätzlich können zu den Kappen und/oder Schaumstoffzuschnitten hin entsprechende Mineralfaserisolierungen vorgesehen sein. Auch für den Fall, dass die erfindungsgemäße brandgeschützte Rohr-/Kabeldurchführung mit Rohren oder Kabeln zumindest teilweise belegt ist, können die Öffnungen verschließende Kappen, und/oder Schaumstoffzuschnitte und/oder ein oder mehrere Mineralfaserisolierungen vorgesehen sein, die dann mit entsprechenden Aussparungen zur Durchführung der Rohre/Kabel versehen sind. Dabei ist es zur Herstellung einer Rauchdichtigkeit im Brandfall bevorzugt, dass die Kappen innenseitig mit einer Brandschutzschicht beschichtet und/oder die Schaumstoffzuschnitte außen- und/oder innenseitig mit einer Brandschutzschicht beschichtet oder mit einem Brandschutzmittel imprägniert sind. Die Kappen können gegebenenfalls auch aus einem intumeszierenden Schaumformteil bestehen oder ein solches enthalten. Die Kappen und/oder Schaumstoffzuschnitte können auch mit einer rauchdichten Schicht aus Silikon oder Polyacrylat versehen sein. Der Fachmann wird diese Maßnahmen, entweder allein oder in Kombination, in Abhängigkeit von der zu erzielenden Feuerwiderstandsdauer vorsehen.

In einem zweiten Aspekt betrifft die vorliegende Erfindung auch eine Brandschutzhülle zur Herstellung einer Rohr-/Kabeldurchführung nach einem der vorhergehenden Ansprüche, umfassend einen flexiblen im Wesentlichen unelastischen flächigen nicht-brennbaren Träger mit einer ersten Fläche und einer gegenüberliegenden zweiten Fläche sowie einem ersten Endabschnitt mit einer ersten Stirnseite und einem gegenüberliegenden zweiten Endabschnitt mit einer zweiten Stirnseite, wobei auf der ersten Fläche eine Brandschutzschicht angeordnet ist und auf der zweiten Fläche mittels einer Klebschicht eine Metallfolie angeordnet ist, die sich über einen der Endabschnitte des Trägers hinaus erstreckt.

Die erfindungsgemäße Brandschutzhülle kann in einfacher Weise aufgerollt oder gefaltet werden, so dass die Endabschnitte mithilfe der Klebschicht über die Metallfolie miteinander verbunden werden können.

Die Brandschutzfolie ist flexibel, so dass sie in einfacher Weise vorzugsweise ohne Verwendung von Werkzeug aufgerollt oder gefaltet werden kann, jedoch vorzugsweise auch so steif, dass die aufgerollte oder gefaltete Form weitgehend beibehält, d.h. auch ohne Stützung nicht in sich zusammenfällt.

Der Träger kann verschiedenartig geformt sein. Bevorzugt ist jedoch, dass der Träger im Wesentlichen rechteckförmig geformt ist und eine Länge x_{T} und eine Breite y_{T} aufweist, und die Metallfolie im Wesentlichen ebenfalls rechteckförmig ist und eine Länge x_{M} und eine Breite y_{M} aufweist, wobei die Länge x_{T} des Trägers der Länge x_{M} der Metallfolie entspricht, und wobei die Metallfolie in Längsrichtung des Trägers, d.h. in Richtung von der ersten Stirnseite zur zweiten Stirnseite, um einen Versatz v_{M} versetzt auf dem Träger angeordnet ist, so dass die Metallfolie sich um den Versatz v_{M} über einen der Endabschnitte des Trägers hinaus erstreckt. Mit dem Teil der Metallfolie, der um den Versatz v_{M} über einen der Endabschnitte des Trägers hinausragt, kann die Verbindung zum anderen Endabschnitt hergestellt werden. Dabei kann der überstehende Teil der Metallfolie selbst mit einer Klebschicht ausgestattet sein. In diesem Fall ist es bevorzugt, dass die Klebschicht mit einer Abdeckfolie abgedeckt ist, um diese bis zur Verbindung mit dem gegenüberliegenden Endabschnitt des Trägers zu schützen. Die Klebschicht kann allerdings auch auf dem Träger vorgesehen sein. In diesem Fall ist es ebenfalls bevorzugt, den Abschnitt der Klebschicht, der erst später mit der Metallfolie verbunden wird, mit einer Abdeckfolie zu schützen.

In einer bevorzugten Ausführungsform der erfindungsgemäßen Brandschutzhülle besteht der Träger aus einem vorzugsweise nicht-brennbaren Gewebe oder einer duroplastischen oder metallischen Folie oder umfasst ein nicht-brennbares Gewebe oder eine duroplastische oder metallische Folie. Bei dem Gewebe kann es sich beispielsweise um ein Glasfasergewebe oder Metallgewebe handeln. Im Falle eines Gewebes ist es besonders bevorzugt, dass das Gewebe so gewoben ist, dass sich der Träger leicht in der gewünschten Richtung aufrollen oder falten, vorzugsweise aufrollen lässt.

Die Erfindung betrifft auch eine Anordnung, die aus einer erfindungsgemäßen brandgeschützten Rohr-/Kabeldurchführung und mindestens einem in die erfindungsgemäße brandgeschützte Rohr-/Kabeldurchführung eingelegten oder durch die brandgeschützte Rohr-/Kabeldurchführung durchgeführten Rohr oder Kabel besteht. Kabel sind bei der erfindungsgemäßen Anordnung vorzugsweise nicht zusätzlich, z.B. durch ein separates Rohr oder eine Manschette geschützt, sondern nur durch die brandgeschützte Kabeldurchführung. Der Hohlraum der brandgeschützten Rohr-/Kabeldurchführung kann dabei in zulässiger Weise mit einem oder mehreren Rohren/Kabeln im Wesentlichen vollständig ausgefüllt sein. Im Wesentlichen ausgefüllt heißt hier, dass die Innenwände der brandgeschützten Rohr-/Kabeldurchführung den Rohr-/Kabelmantel bzw. die Rohr-/Kabelmäntel im Wesentlichen über den gesamten Querschnitt der brandgeschützte Rohr-/Kabeldurchführung berühren, und die brandgeschützte Rohr-/Kabeldurchführung, ungeachtet unvermeidbar entstehender Zwischenräume zwischen den Rohren/Kabeln, vollständig mit Rohren/Kabeln gefüllt ist.

Die Erfindung betrifft auch eine Anordnung, umfassend eine erfindungsgemäße brandgeschützte Rohr-/Kabeldurchführung oder eine Anordnung wie oben beschrieben, d.h. eine Anordnung, bestehend aus einer erfindungsgemäßen brandgeschützten Rohr-/Kabeldurchführung und mindestens einem in die erfindungsgemäße brandgeschützte Rohr-/Kabeldurchführung eingelegten oder durch die brandgeschützte Rohr-/Kabeldurchführung durchgeführten Rohr/Kabel, und eine Wand oder Decke. Es kann sich dabei beispielsweise um massive Wand handeln. Vorzugsweise handelt es sich jedoch um eine Trockenbauwand oder -decke, insbesondere eine leichte Trockenbauwand oder -decke.

Die Erfindung wird im Folgenden anhand von Figuren und bevorzugten Ausführungsformen beispielhaft näher erläutert.

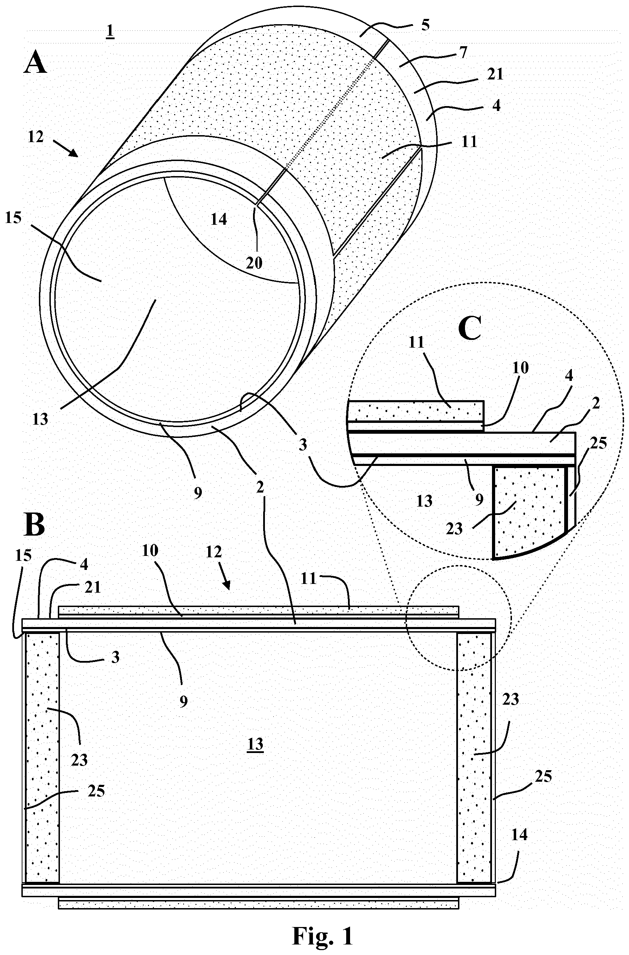

Figur 1 zeigt eine Ausführungsform einer erfindungsgemäßen brandgeschützten Rohr-/Kabeldurchführung. Figur 1A zeigt eine vereinfachte räumliche Ansicht, Figur 1B einen Längsschnitt durch die in Figur 1A dargestellte erfindungsgemäße Rohr-/Kabeldurchführung. Figur 1C zeigt einen vergrößerten Ausschnitt aus Figur 1B.

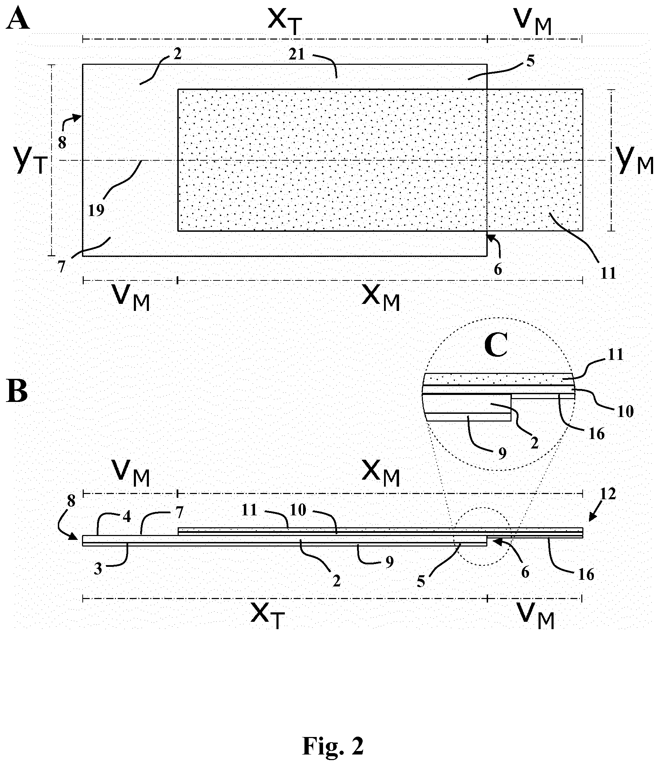

Figur 2 zeigt eine Ausführungsform einer erfindungsgemäßen Brandschutzhülle. Figur 2A zeigt eine Draufsicht auf die Ausführungsform der erfindungsgemäßen Brandschutzhülle, Figur 2B einen Längsschnitt durch die in Figur 2A dargestellte erfindungsgemäße Brandschutzhülle und Figur 2C einen vergrößerten Ausschnitt aus Figur 2B.

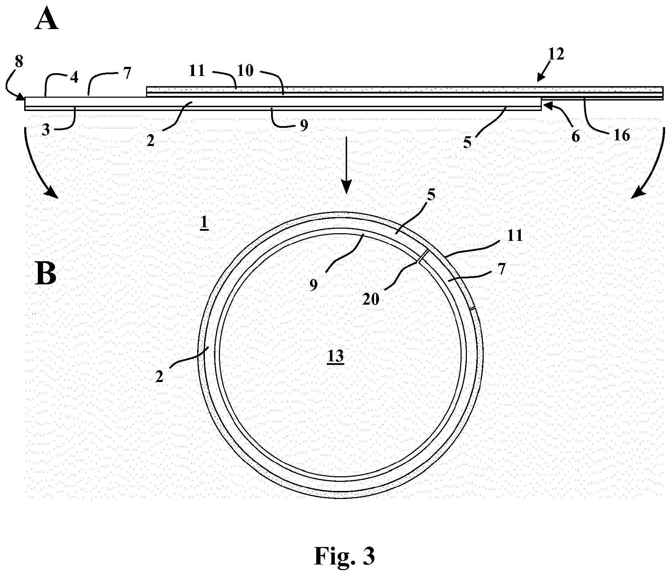

Figur 3 zeigt schematisch die Herstellung einer Ausführungsform einer erfindungsgemäßen Rohr-/Kabeldurchführung aus der in Figur 2 dargestellten erfindungsgemäßen Brandschutzhülle. Figur 3A zeigt die in Figur 2 dargestellte Brandschutzhülle, Figur 3B die zu einer Rohr-/Kabeldurchführung aufgerollte Brandschutzhülle.

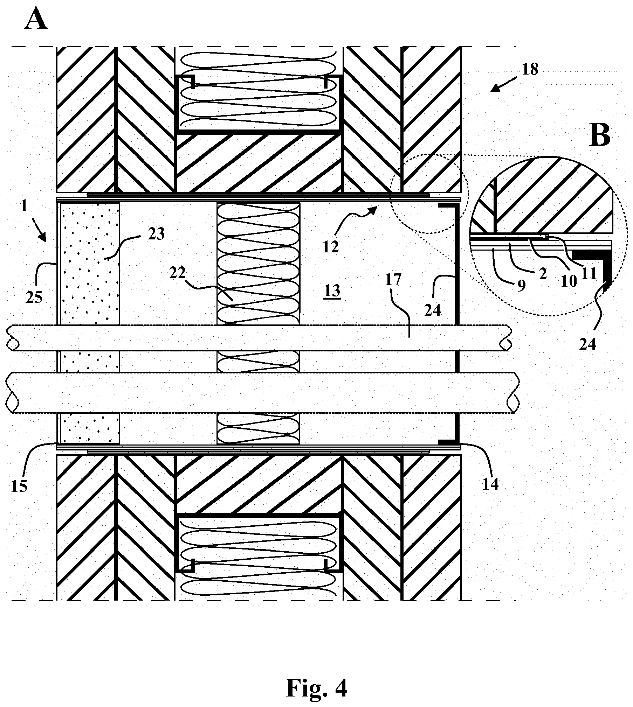

Figur 4 zeigt eine Ausführungsform der erfindungsgemäßen Rohr-/Kabeldurchführung eingebaut in eine leichte Trockenbauwand.

Figur 1 zeigt eine Ausführungsform einer erfindungsgemäßen brandgeschützten Rohr-/Kabeldurchführung. Figur 1A zeigt eine vereinfachte räumliche Ansicht, Figur 1B einen Längsschnitt durch die in Figur 1A dargestellte erfindungsgemäße Rohr-/Kabeldurchführung. Figur 1C zeigt einen vergrößerten Ausschnitt aus Figur 1B. Figur 1A zeigt eine zylinderförmige Ausführungsform einer erfindungsgemäßen Rohr-/Kabeldurchführung 1 mit Öffnungen 14, 15, durch die Kabel/Rohre 17 in die Rohr-/Kabeldurchführung 1 eingelegt bzw. durchgeführt werden können. Die Darstellung ist, insbesondere hinsichtlich der Schichtdicken, nicht maßstäblich. Die Gesamtdicke der hier dargestellten Brandschutzhülle beträgt etwa 1,5 mm. Die Rohr-/Kabeldurchführung 1 besteht hier aus einer zylinderförmig aufgerollten Brandschutzhülle 12. Die Brandschutzhülle 12 besteht aus einem flächigen Träger 2, beispielsweise einem Glasfasergewebe, der hier einseitig, nämlich auf seiner ersten Fläche 3, mit einer Brandschutzschicht 9, hier einer Dämmschichtbildnerschicht, beschichtet ist. Auf der gegenüberliegenden zweiten Fläche 4 des Trägers 2 ist eine Klebschicht 10 und auf dieser eine Metallfolie 11, hier eine Aluminiumfolie, angeordnet. Metallfolie 11 und Klebschicht 10 sind hier schmaler als der Träger 2, so das ein Rand 21 frei bleibt, der nicht von der Klebschicht 10 und der Metallfolie 11 bedeckt ist. Der Träger 2 ist so aufgerollt, dass die Stirnseiten 6, 8 (siehe Figur 2) seiner gegenüberliegenden Endabschnitte 5, 7 aneinander liegen. Die Brandschutzhülle 12 bildet einen Hohlraum 13, dem die Brandschutzschicht 9 zugewendet ist. Im Brandfall schäumt der Dämmschichtbildner bei Überschreiten einer Mindesttemperatur stark auf und verschließt die Rohr-/Kabeldurchführung 1, so dass ein Durchschlagen von Rauch und/oder Feuer verhindert oder zumindest verzögert wird. In dem in Figur 1B dargestellten Schnittbild sind die Öffnungen 14, 15 der Rohr-/Kabeldurchführung 1 verschließende Schaumstoffzuschnitte 23 vorgesehen, die außen mit einer Brandschutzschicht 25, z.B. einer Ablationsbaustoffschicht oder einer Dämmschichtbildnerschicht, verspachtelt sind.

Wie beispielsweise in Figur 2 dargestellt ist, ist der Träger 2 hier rechteckförmig ausgebildet und weist eine Länge x_{T}, beispielsweise 204 mm, und eine Breite y_{T}, beispielsweise 100 mm, auf. Die Metallfolie 11 ist ebenfalls rechteckförmig ausgebildet, mit einer Länge x_{M}, beispielsweise 204 mm, und einer Breite y_{M}, beispielsweise 70 mm. Die Metallfolie 11 ist hier mittels einer Klebschicht 10 mittig auf dem Träger 2 angeordnet, so dass die Mittellängsachsen sowohl des Trägers 2 als auch der Metallfolie 11 entlang der Achse 19 verlaufen. Die Metallfolie 11 ist dabei um einen Versatz v_{M} in Längsrichtung versetzt angeordnet. Da die Länge x_{M} der Metallfolie 11 der Länge x_{T} des Trägers 2 entspricht, steht die Metallfolie 11 um diesen Versatz vM über die erste Stirnseite 6 des Trägers 2 über. Bei der hier dargestellten Ausführungsform der erfindungsgemäßen Brandschutzhülle 12 ist die Klebschicht 10 unterhalb der Metallfolie 11 aufgebracht. Der Teil der Klebschicht 10, der zusammen mit der Metallfolie 11 über den Endabschnitt 5 des Trägers 2 übersteht, ist mit einer Abdeckfolie 16 abgedeckt.

Wie in Figur 3 dargestellt ist, kann die Brandschutzhülle 12 in einfacher Weise zu einer zylindrischen erfindungsgemäßen Rohr-/Kabeldurchführung 1 aufgerollt werden. Die Brandschutzhülle 12 verfügt über eine ausreichende Steifigkeit, um diese Form auch ohne zusätzliche Stützung beizubehalten. Die Brandschutzhülle 12 ist daher also nicht derart flexibel, dass sie nach dem Aufrollen zusammenfallen würde. Wie durch die Pfeile rechts und links angedeutet, wird die Brandschutzhülle 12 zu einem Zylinder aufgerollt, so dass die Brandschutzschicht 9 zu dem durch die Brandschutzhülle 12 gebildeten Hohlraum 13 gerichtet ist. Durch die versetzte Anordnung der Metallfolie 11 hängt ein Teil der Metallfolie 11 zusammen mit der darunter aufgebrachten Klebschicht 10 über den Träger 2 über. Dieser überhängende Teil der Metallfolie 11 kann mithilfe der Klebschicht 10 auf die zweite Fläche 4 in dem gegenüberliegenden zweiten Endabschnitt 7 des Trägers 2 aufgeklebt werden. Da Träger 2 und Metallfolie 11 gleich lang sind und die Endabschnitte 5, 7 des Trägers 2 mit ihren Stirnseiten 6, 8 aneinander gelegt sind, bedeckt die Metallfolie 11 den Träger 2 im Wesentlichen über den gesamten Umfang der im Querschnitt kreisförmigen Brandschutzhülle 12.

Figur 4 zeigt die in Figur 1 dargestellte Ausführungsform der erfindungsgemäßen Rohr-/Kabeldurchführung 1 eingebaut in eine leichte Trockenbauwand 18, die hier eine Stärke von 100 mm aufweist. Die brandgeschützte Rohr-/Kabeldurchführung 1 fluchtet mit den Wandoberflächen. Auch hier sei darauf hingewiesen, dass die Darstellung, insbesondere was die Stärke der einzelnen Schichten der Brandschutzhülle 12 anbelangt, nicht maßstäblich ist. Die Metallfolie 11 beispielsweise ist so dünn, dass, anders als in der Figur dargestellt, im Wesentlichen kein Spalt zwischen der Laibung des Wanddurchbruchs und der Brandschutzhülle 12 verbleibt. Bei dieser Ausführungsform sind rein beispielhaft zu Veranschaulichungszwecken eine Mineralfaserisolierung 22, ein außen mit einer Brandschutzschicht 25 beschichteter Schaumstoffzuschnitt 23 und eine die Öffnung 15 verschließende Kappe 24 dargestellt. Die Kappe 24 ist vorzugsweise innenseitig, gegebenenfalls auch außen, mit einer hier nicht dargestellten Brandschutzschicht 25 beschichtet, oder kann selbst aus einem intumeszierendem Material bestehen. Es können aber auch nur Kappen 24, nur eine oder mehrere Mineralfaserisolierung 22 oder nur Schaumstoffzuschnitt 23, oder Kappen 24, Mineralfaserisolierungen 22 und Schaumstoffzuschnitte in einer beliebigen anderen Kombination vorgesehen sein.

## Patentansprüche

1. Brandgeschützte Rohr-/Kabeldurchführung (1), insbesondere für Trockenbauwände (18), umfassend eine Brandschutzhülle (12) umfassend einen flexiblen unelastischen flächigen Träger (2) mit einer ersten Fläche (3) und einer gegenüberliegenden zweiten Fläche (4) sowie einem ersten Endabschnitt (5) mit einer ersten Stirnseite (6) und einem gegenüberliegenden zweiten Endabschnitt (7) mit einer zweiten Stirnseite (8), wobei mindestens auf der ersten Fläche (3) eine Brandschutzschicht (9) angeordnet ist und auf der zweiten Fläche (4) mittels einer Klebschicht (10) eine Metallfolie (11) angeordnet ist, und wobei der Träger (2) mit der Brandschutzschicht (9) und der Metallfolie (11) derart schlauchförmigaufgerollt oder gefaltet ist, dass i) ein Hohlraum (13) mit zwei gegenüberliegenden Öffnungen (14, 15) gebildet ist, ii) die beiden Endabschnitte (5, 7) des Trägers (2) mit ihren Stirnseiten (6, 8) aufeinander zu gerichtet sind und aneinanderliegen und iii) die Brandschutzschicht (9) zum Hohlraum (13) weist, und wobei die Metallfolie (11) sich über einen der Endabschnitte (5, 7) des Trägers (2) hinaus erstreckt und mittels der Klebschicht (10) mit dem anderen Endabschnitt (7, 5) verbunden ist, und wobei der Träger (2) rechteckförmig mit einer Länge x_{T} und einer Breite y_{T} ist und die Metallfolie (11) rechteckförmig mit einer Länge x_{M} und einer Breite y_{M} ist, und wobei die Länge x_{T} des Trägers (2) der Länge x_{M} der Metallfolie (11) entspricht, und wobei die Metallfolie (11) in Längsrichtung des Trägers (2), d.h. in Richtung von der ersten Stirnseite (6) zur zweiten Stirnseite (8), um einen Versatz v_{M} versetzt auf dem Träger (2) angeordnet ist, so dass die Metallfolie (11) sich um den Versatz v_{M} über einen der Endabschnitte (5, 7) des Trägers (2) hinaus erstreckt.

2. Brandgeschützte Rohr-/Kabeldurchführung (1) nach Anspruch 1, wobei der Träger (2) a) aus einem nicht-brennbaren Gewebe besteht oder ein nicht-brennbares Gewebe umfasst, wobei das Gewebe Glasfasergewebe oder Metallgewebe ist oder umfasst, oder b) aus einer duroplastischen oder metallischen Folie besteht oder eine duroplastische oder metallische Folie umfasst.

3. Brandgeschützte Rohr-/Kabeldurchführung (1) nach einem der vorhergehenden Ansprüche, wobei der Träger (2) mit der Brandschutzschicht (9) und der Metallfolie (11) derart schlauchförmig aufgerollt oder gefaltet ist, dass die Brandschutzhülle (12) einen runden, ovalen oder polygonalen Querschnitt, vorzugsweise einen kreisförmigen, rechteckigen oder quadratischen, besonders bevorzugt einen kreisförmigen Querschnitt aufweist.

4. Brandgeschützte Rohr-/Kabeldurchführung (1) nach einem der vorhergehenden Ansprüche, wobei die Öffnungen (14, 15) des Hohlraumes (13) mit Kappen (24) und/oder Schaumstoffzuschnitten (23) verschlossen sind und/oder zentral im Inneren des Hohlraumes (13) über dessen gesamten Querschnitt eine Mineralfaserisolierung (22) oder ein Schaumstoffzuschnitt vorgesehen ist.

5. Brandgeschützte Rohr-/Kabeldurchführung (1) nach Anspruch 4, wobei die Kappen (24) zum Hohlraum (13) hin mit einer Brandschutzschicht (25) beschichtet und/oder die Schaumstoffzuschnitte (23) mit einer Brandschutzschicht (25) beschichtet oder imprägniert sind.

6. Brandgeschützte Rohr-/Kabeldurchführung (1) nach Anspruch 4 oder 5, wobei zu den Kappen (24) oder Schaumstoffzuschnitten (23) hin Mineralfaserisolierungen (22) vorgesehen sind.

7. Brandschutzhülle (12) zur Herstellung einer Rohr-/Kabeldurchführung (1) nach einem der vorhergehenden Ansprüche, umfassend einen flexiblen unelastischen flächigen nicht-brennbaren Träger (2) mit einer ersten Fläche (3) und einer gegenüberliegenden zweiten Fläche (4) sowie einem ersten Endabschnitt (5) mit einer ersten Stirnseite (6) und einem gegenüberliegenden zweiten Endabschnitt (7) mit einer zweiten Stirnseite (8), wobei auf der ersten Fläche (3) eine Brandschutzschicht (9) angeordnet ist und auf der zweiten Fläche (4) mittels einer Klebschicht (10) eine Metallfolie (11) angeordnet ist, die sich über einen der Endabschnitte (5, 7) des Trägers (2) hinaus erstreckt, und wobei der Träger (2) rechteckförmig mit einer Länge x_{T} und einer Breite y_{T} ist und die Metallfolie (11) rechteckförmig mit einer Länge x_{M} und einer Breite y_{M} ist, und wobei die Länge x_{T} des Trägers (2) der Länge x_{M} der Metallfolie (11) entspricht, und wobei die Metallfolie (11) in Längsrichtung des Trägers (2), d.h. in Richtung von der ersten Stirnseite (6) zur zweiten Stirnseite (8), um einen Versatz v_{M} versetzt auf dem Träger (2) angeordnet ist, so dass die Metallfolie (11) sich um den Versatz v_{M} über einen der Endabschnitte (5, 7) des Trägers (2) hinaus erstreckt..

8. Brandschutzhülle (12) nach Anspruch 7 , wobei der Träger (2) a) aus einem nicht brennbaren Gewebe besteht oder ein nicht brennbares Gewebe umfasst, wobei das Gewebe Glasfasergewebe oder Metallgewebe ist oder umfasst, oder b) aus einer duroplastischen oder metallischen Folie besteht oder eine duroplastische oder metallische Folie umfasst.

9. Anordnung, umfassend oder bestehend aus einer brandgeschützten Rohr-/Kabeldurchführung (1) nach einem der Ansprüche 1 bis 6 und mindestens einem in die brandgeschützte Rohr-/Kabeldurchführung (1) eingelegten oder durch die brandgeschützte Kabeldurchführung (1) durchgeführten Rohr oder Kabel (16).

10. Anordnung, umfassend eine brandgeschützte Rohr-/Kabeldurchführung (1) nach einem der Ansprüche 1 bis 6 oder eine Anordnung nach Anspruch 9 und eine Trockenbauwand (17) oder Trockenbaudecke.

## Claims

1. A fire protected pipe/cable feedthrough (1), particularly for drywalls (18), comprising a fire protection shroud (12) that comprises a flexible, inelastic and planar substrate (2) with a first surface (3) and an opposite second surface (4), as well as a first end section (5) having a first end face (6) and an opposite second end section (7) having a second end face (8), wherein a fire protection layer (9) is arranged at least on the first surface (3) and a metal foil (11) is arranged on the second surface (4) by means of an adhesive layer (10), wherein the substrate (2) with the fire protection layer (9) and the metal foil (11) is tubularly rolled up or folded in such a way that i) a hollow space (13) with two opposite openings (14, 15) is formed, ii) the two end sections (5, 7) of the substrate (2) are directed toward one another and abut on one another with their end faces (6, 8) and iii) the fire protection layer (9) points toward the hollow space (13), and wherein the metal foil (11) extends beyond one of the end sections (5, 7) of the substrate (2) and is connected to the other end section (7, 5) by means of the adhesive layer (10), and wherein the substrate (2) has a rectangular shape with a length x_{T} and a width y_{T} and the metal foil (11) has a rectangular shape with a length x_{M} and a width y_{M}, wherein the length x_{T} of the substrate (2) corresponds to the length x_{M} of the metal foil (11), and wherein the metal foil (11) is arranged on the substrate (2) in an offset manner in the longitudinal direction of the substrate (2), i.e. in the direction from the first end face (6) to the second end face (8), by an offset v_{M} such that the metal foil (11) extends beyond one of the end sections (5, 7) of the substrate (2) by the offset v_{M}.

2. The fire protected pipe/cable feedthrough (1) according to claim 1, wherein the substrate (2) a) consists of a nonflammable woven fabric or comprises a nonflammable woven fabric, with the woven fabric being or comprising a woven fiberglass fabric or a woven metallic fabric, or b) consists of a thermosetting or metallic foil or comprises a thermosetting or metallic foil.

3. The fire protected pipe/cable feedthrough (1) according to one of the preceding claims, wherein the substrate (2) with the fire protection layer (9) and the metal foil (11) is tubularly rolled up or folded in such a way that the fire protection shroud (12) has a round, oval or polygonal cross section, preferably a circular, rectangular or square cross-section, particularly a circular cross section.

4. The fire protected pipe/cable feedthrough (1) according to one of the preceding claims, wherein the openings (14, 15) of the hollow space (13) are closed with caps (24) and/or precut foamed material parts (23) and/or a mineral fiber insulation (22) or a precut foamed material part is provided centrally in the interior of the hollow space (13) over its entire cross section.

5. The fire protected pipe/cable feedthrough (1) according to claim 4, wherein the caps (24) are coated with a fire protection layer (25) toward the hollow space (13) and/or the precut foamed material parts (23) are coated or impregnated with a fire protection layer (25).

6. The fire protected pipe/cable feedthrough (1) according to claim 4 or 5, wherein mineral fiber insulations (22) are provided toward the caps (24) or the precut foamed material parts (23).

7. A fire protection shroud (12) for manufacturing a pipe/cable feedthrough (1) according to one of the preceding claims, comprising a flexible, inelastic, planar and nonflammable substrate (2) with a first surface (3) and an opposite second surface (4), as well as a first end section (5) having a first end face (6) and an opposite second end section (7) having a second end face (8), wherein a fire protection layer (9) is arranged on the first surface (3) and a metal foil (11), which extends beyond one of the end sections (5, 7) of the substrate (2), is arranged on the second surface (4) by means of an adhesive layer (10), and wherein the substrate (2) has a rectangular shape with a length x_{T} and a width y_{T} and the metal foil (11) has a rectangular shape with a length x_{M} and a width y_{M}, and wherein the length x_{T} of the substrate (2) corresponds to the length x_{M} of the metal foil (11), and wherein the metal foil (11) is arranged on the substrate (2) in an offset manner in the longitudinal direction of the substrate (2), i.e. in the direction from the first end face (6) to the second end face (8), by an offset v_{M} such that the metal foil (11) extends beyond one of the end sections (5, 7) of the substrate (2) by the offset v_{M}.

8. The fire protection shroud (12) according to claim 7, wherein the substrate (2) a) consists of a nonflammable woven fabric or comprises a nonflammable woven fabric, with the woven fabric being or comprising a woven fiberglass fabric or a woven metallic fabric, or b) consists of a thermosetting or metallic foil or comprises a thermosetting or metallic foil.

9. An arrangement comprising or consisting of a fire protected pipe/cable feedthrough (1) according to one of claims 1 to 6 and at least one pipe or cable (16), which is inserted into the fire protected pipe/cable feedthrough (1) or fed through the fire protected cable feedthrough (1).

10. An arrangement comprising a fire protected pipe/cable feedthrough (1) according to one of claims 1 to 6 or an arrangement according to claim 9 and a drywall (17) or drywall ceiling.

## Revendications

1. Passage de tube / de câble protégé contre l'incendie (1), en particulier cloisons de construction sèche (18), comprenant une gaine de protection anti-incendie (12) comprenant un support (2) flexible non élastique plan avec une première surface (3) et une deuxième surface (4) opposée, ainsi qu'un premier embout (5) avec une première face avant (6) et un deuxième embout (7) opposé avec une deuxième face avant (8), sachant qu'au moins sur la première surface (3) est disposée une couche de protection anti-incendie (9) et sur la deuxième surface (4) est disposée une feuille métallique (11) au moyen d'une couche adhésive (10) et sachant que le support (2) est enroulé ou plié de forme tubulaire avec la couche de protection anti-incendie (9) et la feuille métallique (11) de telle manière que, i) un espace creux (13) est formé avec deux ouvertures opposées (14, 15), ii) les deux embouts (5, 7) du support (2) sont dirigés avec leurs faces avant (6, 8) l'un vers l'autre et sont l'un à côté de l'autre et, iii) la couche de protection anti-incendie (9) est tournée vers l'espace creux (13) et sachant que la feuille métallique (11) s'étend au-delà d'un des embouts (5, 7) du support (2) et est reliée au moyen de la couche adhésive (10) à l'autre embout (7, 5) et sachant que le support (2) est de forme rectangulaire avec une longueur X_{T} et une largeur Y_{T} et la feuille métallique (11) est de forme rectangulaire avec une longueur X_{M} et une largeur Y_{M} et sachant que la longueur X_{T} du support (2) correspond à la longueur X_{M} de la feuille métallique (11) et sachant que la feuille métallique (11) est disposée dans la direction longitudinale du support (2), c'est-à-dire en direction de la première face avant (6) vers la deuxième face avant (8), déportée d'un déport V_{M} sur le support (2) de telle sorte que la feuille métallique (11) s'étend du déport V_{M} au-delà d'un des embouts (5, 7) du support (2).

2. Passage de tube / de câble protégé contre l'incendie (1) selon la revendication 1, sachant que le support (2) a) est composé d'un tissu incombustible ou comprend un tissu incombustible, sachant que le tissu est ou comprend un tissu à base de fibres de verre ou un tissu métallique, ou b) est composé d'une feuille de plastique thermodurcissable ou métallique ou comprend une feuille de plastique thermodurcissable ou métallique.

3. Passage de tube / de câble protégé contre l'incendie (1), selon l'une quelconque des revendications précédentes, sachant que le support (2) est enroulé ou plié avec la couche de protection anti-incendie (9) et la feuille métallique (11) de façon tubulaire de telle sorte que la gaine de protection anti-incendie (12) comporte une section ronde, ovale ou polygonale, de préférence une section circulaire, rectangulaire ou quadratique, en particulier de préférence une section circulaire.

4. Passage de tube / de câble protégé contre l'incendie (1), selon l'une quelconque des revendications précédentes, sachant que les ouvertures (14, 15) de l'espace creux (13) sont fermées avec des caches (24) et/ou des découpes en mousse (23) et/ou une isolation à base de fibres minérales (22) ou une découpe en mousse est prévue au centre à l'intérieur de l'espace creux (13) sur toute la section de celui-ci.

5. Passage de tube / de câble protégé contre l'incendie (1), selon la revendication 4, sachant que les aches (24) vers l'espace creux (13) sont revêtus d'une couche de protection anti-incendie (25) et/ou les découpes de mousse (23) sont revêtues ou imprégnées d'une couche de protection anti-incendie (25).

6. Passage de tube / de câble protégé contre l'incendie (1), selon la revendication 4 ou 5, sachant que des isolations à base de fibres minérales (22) sont prévues vers les caches (24) ou découpes en mousse (23).

7. Gaine de protection contre l'incendie (12) pour la fabrication d'un passage de tube / de câble (1) selon l'une quelconque des revendications précédentes, comprenant un support (2) flexible non élastique plan avec une première surface (3) et une deuxième surface (4) opposée ainsi qu'un premier embout (5) avec une première face avant (6) et un deuxième embout (7) opposé avec une deuxième face avant (8), sachant que sur la première surface (3) est disposée une couche de protection anti-incendie (9) et sur la deuxième surface (4) est disposée une feuille métallique (11) au moyen d'une couche adhésive (10), qui s'étend au-delà d'un des embouts (5, 7) du support (2) et sachant que le support (2) est de forme rectangulaire avec une longueur X_{T} et une largeur Y_{T} et la feuille métallique (11) est de forme rectangulaire avec une longueur X_{M} et une largeur Y_{M} et sachant que la longueur X_{T} du support (2) correspond à la longueur X_{M} de la feuille métallique (11) et sachant que la feuille métallique (11) est disposée dans la direction longitudinale du support (2), c'est-à-dire en direction de la première face avant (6) vers la deuxième face avant (8), déportée d'un déport V_{M} sur le support (2) de telle sorte que la feuille métallique (11) s'étend du déport V_{M} au-delà d'un des embouts (5, 7) du support (2).

8. Gaine de protection contre l'incendie (12), selon la revendication 7, sachant que le support (2) a) est composé d'un tissu incombustible est ou comprend un tissu incombustible, sachant que le tissu est ou comprend un tissu à base de fibres de verre ou un tissu métallique ou b) est composé d'une feuille de plastique thermodurcissable ou métallique ou comprend une feuille de plastique thermodurcissable ou métallique.

9. Système comprenant ou composé d'un passage de tube / de câble protégé contre l'incendie (1), selon l'une quelconque des revendications 1 à 6 et au moins un tube ou câble (16) introduit dans le passage de tubes/de câbles protégé contre l'incendie (1) ou passé à travers le passage de câble protégé contre l'incendie (1).

10. Système comprenant un passage de tube / de câble protégé contre l'incendie (1), selon l'une quelconque des revendications 1 à 6 ou système selon la revendication 9 et une paroi de construction sèche (17) ou un plafond à cloison sèche.
